(19) Europäisches Patentamt
European Patent Office
Office européen des brevets

(11) Veröffentlichungsnummer: **0 141 169**
**B1**

(12) # EUROPÄISCHE PATENTSCHRIFT

(45) Veröffentlichungstag der Patentschrift: **09.12.87**

(51) Int. Cl.⁴: **C 01 B 17/04**, B 01 D 53/14

(21) Anmeldenummer: **84110700.6**

(22) Anmeldetag: **07.09.84**

(54) **Verfahren zum Reinigen eines Gasstromes.**

(30) Priorität: **20.09.83 DE 3333933**

(43) Veröffentlichungstag der Anmeldung: **15.05.85 Patentblatt 85/20**

(45) Bekanntmachung des Hinweises auf die Patenterteilung: **09.12.87 Patentblatt 87/50**

(84) Benannte Vertragsstaaten: **AT BE DE FR GB IT NL**

(56) Entgegenhaltungen:
**FR - A - 2 205 476**
**FR - A - 2 384 711**
**GB - A - 1 328 704**
**US - A - 2 139 375**
**US - A - 3 533 732**
**US - A - 3 594 985**

(73) Patentinhaber: **Linde Aktiengesellschaft, Abraham-Lincoln-Strasse 21, D-6200 Wiesbaden (DE)**

(72) Erfinder: **Heisel, Michael, Dr. Dr. Ing., Seestrasse 6, D-8000 München 40 (DE)**
Erfinder: **Linde, Gerhard, Dr. Dr. Ing., Eichleite 5, D-8022 Grünwald (DE)**

(74) Vertreter: **Schaefer, Gerhard, Dr., Linde Aktiengesellschaft Zentrale Patentabteilung, D-8023 Höllriegelskreuth (DE)**

**EP 0 141 169 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft ein Verfahren zum Reinigen eines mindestens mit CO2 und H2S verunreinigten Gasstromes, der vorgewärmt und in Gegenwart von rückgeführtem SO2 einer katalytischen Umsetzung des H2S zu elementarem Schwefel unterworfen wird, wobei der dabei anfallende elementare Schwefel abgetrennt und das zumindest H2S, SO2, CO2 und Wasser enthaltende Restgas nach oxidativer Umsetzung des H2S zu CO2 und Abkühlung einer Wäsche mit einem Polyäthylenglykoläther enthaltenden Lösungsmittel zugeführt wird, das nach Beladung mit SO2 regeneriert und wiederverwendet und das bei der Regenerierung freiwerdende SO2 zur katalytischen Umsetzung des H2S zurückgeführt wird.

Ein bei der Verarbeitung von Rohgasströmen häufig erforderlicher Verfahrensschritt ist die Abtrennung von Sauergasen, worunter im wesentlichen CO2, H2S und Merkaptane verstanden werden. Von diesen wegen ihrer korrodierenden und katalysatorschädigenden Eigenschaften oder auch aus anderen Gründen von nachgeschalteten Anlagen fernzuhaltenden Verbindungen sind CO2 und H2S am häufigsten und im allgemeinen in höchster Konzentration in den Gasströmen, wie hauptsächlich Erdgas oder Spaltgasen, enthalten.

Da bei der Abtrennung von Sauergasen aus Rohgasen zu beachten ist, dass H2S im Gegensatz zu CO2 wegen seiner Giftigkeit nicht oder zumindest nur in äusserst geringen Konzentrationen an die Umwelt abgegeben werden darf, wird diese Komponente üblicherweise in einer nachgeschalteten Anlage auf elementaren Schwefel aufgearbeitet. Da das für die Umwelt ungefährliche CO2 in einer Schwefelgewinnungsanlage jedoch lediglich als unerwünschter Ballast anzusehen ist, werden zur Entfernung dieser Sauergase aus Gasströmen in grossem Umfang für H2S selektive Wäschen angewendet. In diesem Verfahren fällt bei der Regenerierung des Waschmittels neben einem schwefelwasserstoffreichen, nur einen Teil des abgetrennten CO2 enthaltenden Gasstrom ein von H2S freier, kohlendioxidhaltiger Restgasstrom an, der unmittelbar in die Atmosphäre abgelassen werden kann. Gegebenenfalls kann aus diesem Strom auch reines CO2 für andere Verwertungszwecke isoliert werden.

Für die selektive Abtrennung sind sowohl chemische als auch physikalische Waschverfahren entwickelt worden. Insbesondere bei der Reinigung eines relativ stark mit CO2 verunreinigten Gasstromes werden dabei seit Jahren in grossem Umfang die physikalischen Waschverfahren bevorzugt angewendet. Die dabei eingesetzten Waschflüssigkeiten lösen die Sauergasbestandteile ohne chemische Bindung und können von ihnen durch Entspannen, Erwärmen und/oder Destillieren wieder befreit werden.

Die bei der für H2S selektiven Wäsche anfallende, mit H2S angereicherte Restgasfraktion enthält, je nach dem Schwefelwasserstoffgehalt des zu reinigenden Gasstromes, üblicherweise zwischen 10 und 85 Mol% H2S und wird beispielsweise in einer auf der Claus-Reaktion

$$2\,H2S + SO2 \rightarrow 3/xS_x + 2H2O + \Delta H$$

beruhenden Schwefelgewinnungsanlage zu elementarem Schwefel verarbeitet.

Die Umsetzung zu elementarem Schwefel ist allerdings nie vollständig, sondern es fällt immer ein H2S und SO2 enthaltendes Restgas an. Obwohl der grösste Teil der aus dem Gasstrom abgetrennten Schwefelverbindungen zu elementarem Schwefel aufgearbeitet wird, sind die im Restgas enthaltenen Schwefelverbindungen noch in einer Konzentration anzutreffen, die eine Abgabe in die Atmosphäre verbietet.

Zur weiteren Reinigung des Restgases wurde neben vielen anderen Verfahren mit mehreren Katalysatorstufen vorgeschlagen, das Restgas nach Abkühlung und Schwefelabtrennung einer Oxidation in Gegenwart von Luft und Brenngas zuzuführen. Dabei werden alle eventuell vorhandenen Kohlenwasserstoffe zu CO2 und Wasser und alle Schwefelverbindungen im wesentlichen zu SO2 oxidiert. Das entsprechende Gas wird gekühlt und in einem Absorber mit beispielsweise Triäthanolamin gewaschen, das für SO2 selektiv ist. Das beladene Lösungsmittel wird in einem Stripper durch Drucksenkung von SO2 befreit, das mit Wasser gesättigt in den Rohgasstrom vor dem Claus-Reaktor zurückgeführt wird (Hydrocarbon Processing, July 1979, Seiten 197–200).

Dieses Verfahren hat jedoch den Nachteil, dass in dem rückgeführten SO2 immer einige ppm des Amins vorhanden sind, die bei nicht vollständiger Verbrennung in der Claus-Anlage reagieren und den Katalysator verstopfen. Auf längere Sicht können auch die Wärmetauscher verstopft werden durch die Bildung von Carbamaten und anderen Ammoniumverbindungen, die insbesondere an kühleren Anlagestellen zu unlöslichen Ablagerungen führen. Innerhalb kürzester Zeit müssen deshalb die Katalysatoren verworfen und die Wärmetauscher mit grossem Energieaufwand wieder einsatzfähig gemacht werden.

Weiterhin ist aus der Patentschrift US-A-2139375 die Verwendung von Glykoläthern als Lösungsmittel, welches selektiv für SO2 ist, bekannt sowie aus der Patentschrift US-A-3594985 die Verwendung von Dialkyläthern wie z.B. Polyäthylenglykol zur Entfernung von sauren Gasen, wie CO2, H2S, SO2. Letztgenannte Lösungsmittel haben den Nachteil, dass die Homologen mit niedrigem Molekulargewicht relativ flüchtig sind, so dass Lösungsmittelverluste auftreten. Andererseits sind die höher molekularen Homologen, die nicht so flüchtig sind, ziemlich viskose Flüssigkeiten. Die hohe Viskosität erschwert den Lösungsmittelfluss durch die Absorber, so dass weniger Gas behandelt werden kann.

Ein weiteres bekanntes Lösungsmittel zur Entfernung von H2S aus Gasströmen ist eine Mischung aus mehreren Dialkyläthern, wie in der US-A-3533732 beschrieben.

Der vorliegenden Erfindung liegt daher die Aufgabe zugrunde, die Schwefelrückgewinnung gegenüber den bekannten Verfahren zu verbessern bei gleichzeitiger Verringerung der Investitionskosten.

Diese Aufgabe wird erfindungsgemäss dadurch gelöst, dass das Restgas in Regeneratoren auf eine Temperatur zwischen 60 und 120°C abgekühlt wird, wobei sich die Regeneratoren auf eine Temperatur zwischen 200 und 300°C aufheizen, dass das Lösungsmittel auf Trockenbasis, zu 60 bis 80% aus Tetraäthylenglykoldimethyläther zu 15 bis 25% aus Triäthylenglykoldimethyläther, zu 2,5 bis 7,5% aus Pentaäthylenglykoldimethyläther und zu 2,5 bis 7,5% aus Halbäthern besteht und dass das gewaschene, schwefelfreie Restgas in den Regeneratoren aufgeheizt und in den Kamin abgegeben wird.

Die erfindungsgemässe Kombination aus Regeneratoren zur Abkühlung des Restgases und einer physikalischen Wäsche mit Tetraäthylenglykoldimethyläther bringt grosse Vorteile. So ermöglicht es die Verwendung von Regeneratoren, das gereinigte Gas aus der SO2-Wäsche heiss in den Kamin abzugeben. Dadurch wird die Verteilung in der Atmosphäre verbessert und die ohnehin geringe Immission von SO2 noch weiter abgesenkt. Auch der Bedarf an Brenngas verringert sich erheblich, gegebenenfalls auf Null.

Die Verwendung von Regeneratoren ist im allgemeinen und speziell im Vergleich zu dem bei dem beschriebenen Verfahren verwendeten Abhitzekessel sehr unkompliziert. Die anfallenden Verunreinigungen, nämlich Wasser und elementarer Schwefel, stören den Kühlbetrieb von Regeneratoren kaum.

Die Zusammensetzung des verwendeten Lösungsmittels bietet den Vorteil, dass der Dampfdruck des Lösungsmittels gering ist. Da im Lösungsmittel ausserdem keine hochmolekularen Homologen (mit mehr als 6 Äthylengruppen) enthalten sind, ist die Viskosität des Lösungsmittels so gering, dass es ohne Schwierigkeiten umgewälzt werden kann.

Zur Kühlung der aufgeheizten Regeneratoren kann vorteilhaft schwefelfreies Gas verwendet werden, da das gereinigte Gas dann heiss in den Kamin abgegeben werden kann. Hierdurch wird, wie bereits erwähnt, die Verteilung in die Atmosphäre verbessert und die Immission von SO2 noch weiter gesenkt. Restgas vor der oxidativen Umsetzung kann mit Vorteil durch Kühlung der Regeneratoren angewärmt werden. Dabei ist allerdings darauf zu achten, dass im zu kühlenden Regenerator kein Sauerstoff oder SO2 vorhanden ist, um eine eventuell auftretende massive Bildung von elementarem Schwefel zu verhindern. Dies wird beispielsweise dadurch erreicht, dass kurzzeitig – einige Sekunden – mit schwefelfreiem Gas der Regenerator gespült wird und anschliessend Restgas zur Kühlung des Regenerators durch diesen geleitet wird.

Selbstverständlich können die genannten Gasströme auch gleichzeitig, jedoch voneinander getrennt zur Kühlung der Regeneratoren verwendet werden.

Insgesamt ist eine Vereinfachung der Claus-Anlage erreichbar: Es wird nur noch ein Reaktor zur Durchführung der Claus-Reaktion und ein Schwefelkondensator zur Abtrennung des elementaren Schwefels verwendet anstatt wie bisher dem üblichen Claus-Brenner, Abhitzekessel, ersten Claus-Reaktor mit Kondensator und Aufheizung, einem zweiten und gegebenenfalls dritten Claus-Reaktor mit jeweiligem Kondensator und Wärmetauscher für die Wiedererwärmung. Trotz der nunmehr verwendeten einfachen Anlage kann eine Schwefelrückgewinnung von über 99,9% erzielt werden. Da dabei kein Claus-Brenner erforderlich ist, wird kein COS und/oder CS2 erzeugt und damit die Schwefelrückgewinnung von vornherein vereinfacht.

Auch die Regelung der gesamten Anlage wird vereinfacht, da keine exakte Einstellung des stöchiometrischen Verhältnisses von H2S zu SO2 = 2 erforderlich ist. Ist dieses Verhältnis grösser als 2, so reagiert die Anlage gutmütig, d.h. das überschüssige H2S wird katalytisch oxidiert und als überschüssiges SO2 rückgeführt. Dadurch reguliert sich die verringerte Verbrennung von selbst. Ist das Verhältnis H2S zu SO2 kleiner als 2, dann wird zu viel SO2 im Kreislauf geführt und die Anlage unnötig aufgebläht. Aus diesem Grunde sollte dieser Betriebszustand möglichst vermieden werden. In keinem Fall aber, d.h. weder H2S zu SO2 kleiner 2 noch grösser 2, verringert sich die Schwefelrückgewinnung der Anlage. Dies bedeutet, dass die Anlage auch und gerade dann vorteilhaft einzusetzen ist, wenn mit Schwankungen der Rohgaszusammensetzung zu rechnen ist, wie z.B. in Raffinerien.

Bei hohem H2S-Gehalt im Rohgas, z.B. grösser als 70 Mol%, entsteht bei der Claus-Reaktion viel Wasser, das in den Regeneratoren nicht völlig auskondensiert werden kann. Zusätzlich zu den Regeneratoren kann dann ein Quenchturm mit Wasserkreislauf eingesetzt werden, der das Gas im direkten Wärmetausch mit Wasser auf ca. 40°C abkühlt. Beispiele für diese Art der Kühlung sind unter anderem aus Hydrocarbon Processing, April 1972, Seite 114 bekannt.

Das erfindungsgemäss eingesetzte physikalische Lösungsmittel bietet dabei den Vorteil einer selektiven SO2-Absorption gegenüber CO2 und einer einfachen Regenerierbarkeit. Dabei ist es jedoch nicht zu vermeiden, dass Spuren des Lösungsmittels mit dem rückgeführten SO2 in die Claus-Anlage gelangen. Das Lösungsmittel verbrennt aber in der Claus-Anlage zu CO2 und Wasser, so dass keine Schädigungen durch das Lösungsmittel im Katalysator auftreten. Auch wenn die Claus-Anlage im Bypass betrieben wird, entstehen keine Probleme. Durch die geringe Flüchtigkeit gelangt ohnehin nur sehr wenig – z.B. 30 vppm im rückgeführten SO2 – des Lösungsmittels zurück zur Claus-Anlage. Solch geringe Spuren sind unproblematisch, da sich zumindest Teile davon über den Claus-Katalysator zu den un-

schädlichen Komponenten CO, H2, CO2 und Wasser zersetzen.

Vor Abkühlung des Restgases in den Regeneratoren kann das Restgas in Weiterbildung des Erfindungsgedankens im Wärmetausch zu verunreinigtem Gasstrom abgekühlt werden, so dass für die Rohgasvorwärmung keine zusätzlichen Energiekosten anfallen. Diese Variante kommt vor allem dann in Betracht, wenn der H2S-Gehalt des Rohgases sehr hoch ist, z.B. grösser als 80 Mol%. Durch das dann wärmere Gas nach der oxidativen Umsetzung ergeben sich Einsparmöglichkeiten für die Heizenergie.

Das erfindungsgemäss vorgeschlagene Lösungsmittel besitzt im Vergleich zu anderen Absorptionsmitteln einen niedrigeren Dampfdruck, so dass die Wäsche bei nahezu Umgebungstemperatur durchgeführt werden kann. Damit muss das aus den Regeneratoren kommende Gas noch weiter abgekühlt werden. Dies kann beispielsweise im indirekten Wärmetausch zu Kühlwasser erfolgen. Andererseits besteht aber auch die Möglichkeit, den Wärmeinhalt des noch warmen Gases zur Beheizung der Regeneriersäule zu nützen. Diese Variante kommt insbesondere dann mit grossem Vorteil zur Anwendung, wenn die oxidative Umsetzung des H2S zu SO3 im Restgas rein thermisch erfolgt, was wiederum speziell bei kleinen Gasmengen wirtschaftlich sein kann. Diese Umsetzung erfordert dann allerdings Temperaturen von z.B. 600 °C am Austritt des Verbrennungsofens.

Überdies ist es besonders günstig, wenn das erfindungsgemäss vorgeschlagene Lösungsmittel auf Trockenbasis zu 70% aus Tetraäthylenglykoldimethyläther, zu 20% Triäthylenglykoldimethyläther, zu 5% Pentaäthylenglykoldimethyläther und zu 5% Halbäthern besteht.

Das erfindungsgemässe Verfahren ist einsetzbar zur Reinigung aller $H_2S$-haltigen Gasströme. Wenn dabei das Rohgas Komponenten enthält, die vor Eintritt in die Claus-Anlage verbrannt werden müssen, z.B. HCN, kann selbstverständlich eine übliche, vorzugsweise wiederum einstufige Claus-Anlage der $SO_2$-Auswaschung vorgeschaltet werden. In dem Claus-Brenner ist die Verbrennung dann stärker unterstöchiometrisch durchzuführen als in einer üblichen Claus-Anlage, da das rückgeführte $SO_2$ hinter dem Claus-Brenner zugegeben wird und nach der Zumischung des $SO_2$ ein Verhältnis von $H_2S$ zu $SO_2$ nahe 2 erzielt werden soll. In einem derartigen Fall (HCN-Verbrennung) kann üblicherweise die Anwärmung des von elementarem Schwefel befreiten Gases entfallen. Die im Gas aus der oxidativen Umsetzung zur Verfügung stehende Wärme genügt nämlich im allgemeinen, um die Verbrennungsluft und/oder das Gas für die oxidative Umsetzung soweit aufzuheizen, dass die Zündtemperatur auch ohne Wärmezufuhr von aussen, z.B. durch ein Brenngas, erreicht wird.

Auch bei sehr hohem $H_2S$-Gehalt im Rohgas kann das von elementarem Schwefel befreite Gas gegebenenfalls noch selbst brennen, so dass ohne Zufuhr von externem Brenngas gearbeitet werden kann.

Zur Anwärmung bzw. oxidativen Umsetzung des $H_2S$ zu $SO_2$ kann statt Luft im allgemeinen auch Rein-$O_2$ bzw. mit Sauerstoff angereicherte Luft verwendet werden. Damit verringert sich der Inertgasanteil in der Waschsäule, wodurch die Waschwirkung und auch die Schwefelrückgewinnung verbessert werden.

Im folgenden sei das erfindungsgemässe Verfahren anhand eines in zwei Figuren schematisch dargestellten Ausführungsbeispiels näher erläutert.

Es zeigen:

Figur 1 Verfahrensführung mit Abkühlung des Restgases gegen Rohgas vor den Regeneratoren und

Figur 2 Ausnutzung des Wärmeinhaltes des in den Regeneratoren gekühlten Gases zur Beheizung der Regeneriersäule.

Gemäss Figur 1 tritt das zu entschwefelnde Rohgas bei 1 in die Anlage ein. In einem Wärmetauscher 2 wird das Gas im Wärmetausch zu Restgas, auf das noch näher eingegangen wird, vorgeheizt.

Das vorgeheizte Gas wird mit $SO_2$ aus Leitung 3, das ebenfalls noch näher beschrieben wird, gemischt und einem Reaktor 4 zugeleitet. Dieser Reaktor 4 enthält eine Schüttung aus einem üblichen Claus-Katalysator (z.B. aktiviertes Aluminiumoxid). Über diesen Katalysator findet die Claus-Reaktion statt, die exotherm ist, so dass sich die Temperatur im Reaktor erhöht. Dabei werden etwa 80% des im Rohgas enthaltenen $H_2S$ zu elementarem Schwefel umgesetzt. Der elementare Schwefel wird in einem Kondensator 5 durch Abkühlung des Gases gewonnen und über Leitung 6a als Produktschwefel abgezogen.

Im Gegensatz zu üblichen Claus-Anlagen wird nun nicht versucht, durch nachfolgende katalytische Claus-Stufen und/oder durch geeignete Nachreinigungsverfahren die Einstellung des thermodynamischen Gleichgewichtes in Richtung Schwefelbildung zu verbessern. Stattdessen wird der im folgenden beschriebene, gänzlich andere Weg eingeschlagen:

Das im Kondensator 5 anfallende Gas in Leitung 6 enthält neben $H_2S$, $SO_2$ und geringen Mengen elementarem Schwefel noch die nicht reagierenden Gasbestandteile des Rohgases, nämlich z.B. $CO_2$ und $N_2$, sowie das Reaktionsprodukt Wasser. Dieses Gasgemisch wird einem Ofen 7 zugeführt und dort in Gegenwart von über 8 herangeführter Luft (oder Sauerstoff) und Brenngas aus Leitung 9 angewärmt. Luft wird dabei leicht überstöchiometrisch (10% Überschuss) zugespeist, um eine vollständige Umsetzung von $H_2S$ und elementarem Schwefel zu $SO_2$ sicherzustellen.

Der Luftüberschuss sollte nicht zu gross gewählt werden, da ansonsten die Gefahr der Bildung von $SO_3$ besteht (maximaler $O_2$-Überschuss von 25%). Eine exakte Dosierung der Luftmenge, wie sie in Claus-Anlagen zur Erreichung guter Umsätze erforderlich ist, ist im vorliegenden Verfahren nicht nötig. Denn der überschüssige Sauerstoff, der in der üblichen Claus-Anlage die Katalysatoren zerstören würde und deshalb dort untragbar ist, wird in der nachfolgenden Wäsche nicht ausgewaschen und gelangt deshalb nicht in die Claus-Anlage zurück, sondern wird mit dem gereinigten Abgas in den Kamin abgegeben.

Mit dem Ofen 7 wird eine Temperatur von 250 bis 350 °C eingestellt. Bei diesen Temperaturen ist der Umsatz von $H_2S$ und elementarem Schwefel zu $SO_2$ bei weitem nicht vollständig. Deshalb wird in einem nachfolgenden Reaktor 10 ein aktivierter Aluminiumoxidkatalysator eingesetzt, der vollständigen Umsatz sicherstellt. Am Austritt aus dem Reaktor 10 sind in dem Gas bei Temperaturen von über 350 °C noch max. 5 vppm $H_2S$ und elementarer Schwefel enthalten.

Das heisse Gas wird über Leitung 11 im Wärmetauscher 2 abgekühlt und automatisch arbeitenden Regeneratoren A, B, C zugeleitet. Dort wird das Gas weiter abgekühlt, wobei ein Teil des bei der Claus-Reaktion entstandenen Wassers auskondensiert. Das gekühlte Gas wird über eine Leitung 12 abgezogen, in einem Wärmetauscher 13 gegen Kühlwasser auf Umgebungstemperatur abgekühlt und das auskondensierte Wasser in einem Abscheider 14 abgetrennt und über Leitung 15 abgezogen.

Das kalte Gas wird über Leitung 16 in den unteren Teil einer Waschsäule 17 geführt. Dort wird im Gegenstrom zu regeneriertem Lösungsmittel der erfindungsgemässen Zusammensetzung, das am Kopf der Säule über Leitung 18 aufgegeben wird, $SO_2$ aus dem Gas ausgewaschen. Das praktisch völlig schwefelfreie Gas verlässt die Säule 17 am Kopf über Leitung 19, wird in den Regeneratoren unter gleichzeitiger Kühlung derselben aufgeheizt und geht von dort über Leitung 20 in den Kamin. Dieses Gas kann umweltunschädlich abgegeben werden, da es allenfalls noch geringe Spuren von $SO_2$ enthält.

Das beladene Lösungsmittel verlässt die Säule am Sumpf über Leitung 21 und wird von einer Pumpe 22 zu einer Regeneriersäule 23 geleitet, wobei es in einem Wärmetauscher 24 im Gegenstrom zu regeneriertem Lösungsmittel vorgewärmt wird. In der Regeneriersäule 23 wird durch Dampfbeheizung 25 das gelöste $SO_2$ aus dem Lösungsmittel ausgetrieben, wobei auch geringe Mengen an $CO_2$ und anderen Gasbestandteilen des Rohgases ausgasen. Die Selektivität des Lösungsmittels ist jedoch in jedem Fall so gross, dass die $SO_2$-Menge den Hauptanteil des Gases ausmacht, das die Regeneriersäule über Kopf verlässt. Das Gas wird im Kühler 34 abgekühlt, um Lösungsmitteldämpfe zu kondensieren. Das Kondensat wird im Abscheider 35 abgetrennt und zum Kopf der Säule 23 zurückgeführt. Die $SO_2$-Fraktion wird über Leitung 3 vor der Claus-Anlage dem Rohgas zugemischt.

Das regenerierte Waschmittel wird über Leitung 18 abgezogen und mittels einer Pumpe 26 dem Wärmetauscher 24 zugeleitet, dort abgekühlt und schliesslich dem Kopf der Waschsäule 17 aufgegeben.

Um die hinter dem Abscheider 5 verbleibende Menge an $H_2S$ zu verringern, kann in dem Reaktor 4 ein oxidierender Katalysator eingesetzt werden, der dazu dient, $H_2S$ zu $SO_2$ zu oxidieren und zugleich die Claus-Reaktion zu katalysieren. Der zur Oxidation erforderliche Sauerstoff kann dann als Luft dem Kreislauf-$SO_2$ über die gestrichelte Leitung 27 zugegeben werden. Ein Analysator regelt die Luftmenge dabei so, dass hinter dem Abscheider 5 das Verhältnis $H_2S$ zu $SO_2$ möglichst nahe an 2 ist.

In Figur 2 ist eine Variante des erfindungsgemässen Verfahrens dargestellt, nach der die in dem Restgas aus den Regeneratoren enthaltene Wärmemenge nutzbringend ausgenutzt wird. Das in den Regeneratoren abgekühlte Gas in Leitung 12 wird demnach zur Beheizung der Regeneriersäule 23 herangezogen und im Wärmetausch zu einem Seitenstrom des regenerierten Lösungsmittels im Wärmetauscher 25 abgekühlt und einem Abscheider 28 zugeführt. Der Wärmeinhalt des Gases reicht völlig zur Beheizung der Regeneriersäule aus. Das bei der Abkühlung des Gases auskondensierende Wasser wird im Abscheider 28 abgetrennt und über Leitung 29 angezogen. Das Gas aus dem Abscheider 28 kann gegebenenfalls noch weiter abgekühlt werden in einem Kühler 30 (z.B. Kühlwasser), wobei weiteres Wasser auskondensiert. Dieses Wasser wird in einem Abscheider 31 abgetrennt und über Leitung 32 dem Kondensat in Leitung 29 zugemischt. Das Gas aus dem Abscheider 31 wird sodann über Leitung 33 in den unteren Teil der Waschsäule 17 eingeführt und dort, wie beschrieben, behandelt.

Beispiel 1:
Reinigung eines Claus-Abgases

2000 kmol/h Rohgas der Zusammensetzung

| | |
|---|---|
| $H_2$ | 0,62 Mol% |
| $N_2$ | 58,52 Mol% |
| CO | 0,04 Mol% |
| $CO_2$ | 1,06 Mol% |
| $NH_3$ | 0,10 Mol% |
| $H_2S$ | 0,87 Mol% |
| $SO_2$ | 0,33 Mol% |
| Restschwefel | 0,16 Mol% |
| $H_2O$ | 38,30 Mol% |

verlassen den Schwefelkondensator 5 der Claus-Anlage und gelangen mit ca. 140 bis 150 °C und 1,4 bar zum Ofen 7. Dort wird das Gas mit Hilfe von 15,9 kmol/h Brenngas (Methan) und 395 kmol/h Luft auf 280 °C aufgeheizt und tritt in den katalytischen Reaktor 10 ein. Dort werden alle brennbaren Komponenten umgesetzt zu $CO_2$, $H_2O$ und $SO_2$. Hinter Reaktor 10 hat das Gas eine Temperatur von ca. 500 °C.

Es enthält nur noch maximal 5 vppm an $H_2S$, elementarem Schwefel, COS und $CS_2$. Das heisse Gas wird zu den Regeneratoren A, B, C geleitet und dort auf ca. 90 °C abgekühlt.

Die Säule 17 ist bei diesem Beispiel zweigeteilt. In den unteren Teil wird das in den Regeneratoren gekühlte Gas eingeleitet und im Gegenstrom zu kaltem Kreislaufwasser auf 40 °C abgekühlt. Dabei kondensiert das mit dem Gas eingetragene Wasser weitestgehend aus und wird zusammen mit dem Kreislaufwasser am Sumpf der Säule 17 abgezogen.

Das kalte Gas tritt über einen Kaminboden in den oberen Teil der Säule 17 ein. Dort wird das $SO_2$ ausgewaschen. Das Reingas (1.637,8 kmol/h) verlässt die Säule über Kopf und wird im Regenerator auf ca. 250 °C angewärmt und dann in den Kamin abgegeben. Das Reingas hat die folgende Zusammensetzung:

| | |
|---|---|
| $N_2$ | 89,95 Mol% |
| $CO_2$ | 2,28 Mol% |
| $SO_2$ | $<$ 10 ppm |
| $O_2$ | 0,82 Mol% |
| $H_2O$ | 6,95 Mol% |

Das beladene Waschmittel wird zur Regeneriersäule 23 gepumpt und dort mit Dampf von ca. 6 bar angewärmt. Aus Abscheider 35 wird das angereicherte $SO_2$ mit ca. 40 °C abgezogen und zur Claus-Anlage zurückgeführt. Die $SO_2$-Fraktion (41 kmol/h) hat die folgende Zusammensetzung:

| | |
|---|---|
| $N_2$ | 1,42 Mol% |
| $CO_2$ | 1,71 Mol% |
| $SO_2$ | 96,87 Mol% |
| $H_2O$ | gesättigt |

Beispiel 2:
Verarbeitung eines schwefelarmen Claus-Gases

Durch Leitung 1 werden der Anlage 1000 kmol/h eines Rohgases folgender Zusammensetzung zugeführt:

| | |
|---|---|
| $H_2S$ | 8,0 Mol% |
| $N_2$ | 5,0 Mol% |
| $CO_2$ | 87,0 Mol% |

Das Gas wird im Wärmetauscher 2 auf ca. 240 °C vorgewärmt. Durch Leitung 3 werden dem Rohgas 52 kmol/h Kreislauf-$SO_2$ zugemischt. Dieses Gas hat folgende Zusammensetzung:

| | |
|---|---|
| $SO_2$ | 77,78 Mol% |
| $CO_2$ | 15,28 Mol% |
| $H_2O$ | 6,94 Mol% |

Im Reaktor 4 läuft nun die Claus-Reaktion unter Bildung von elementarem Schwefel ab. Dieser wird im Kondensator 5 zum grössten Teil flüssig abgezogen. Die dabei gewonnene Schwefelmenge ist gleich der Schwefelmenge, die im Rohgas enthalten ist. Der Umsatz, bezogen auf die Summe von Rohgas und Kreislauf-$SO_2$, beträgt etwa 75 bis 80%, die Rückgewinnung nur ca. 67%.

Durch Leitung 6 strömen 1028 kmol/h eines Gases zum Ofen 7, das neben $H_2S$ und $SO_2$ noch Schwefeldampf und Schwefeltröpfchen enthält und folgende Zusammensetzung besitzt:

| | |
|---|---|
| $H_2S$ | 1,57 Mol% |
| $SO_2$ | 0,78 Mol% |
| $S_2$ | 0,78 Mol% |
| $N_2$ | 4,68 Mol% |
| $CO_2$ | 85,41 Mol% |
| $H_2O$ | 6,61 Mol% |

Im Ofen 7 wird Brenngas verbrannt und die heissen Verbrennungsabgase mit dem Gas aus dem Kondensator 5 vermischt. Dadurch stellt sich am Eintritt in den Reaktor 10 eine Temperatur von ca. 280 °C ein. Dort werden $H_2S$ und Schwefeldampf zu $SO_2$ verbrannt, wobei auch Spuren von $SO_3$ entstehen. Das heisse Gas wird zunächst in einem (nichtdargestellten) Wärmetauscher zur Dampferzeugung genutzt und anschliessend im Wärmetauscher 2 gegen kaltes Rohgas auf etwa 330 °C abgekühlt. Es erfährt schliesslich in einem der Regeneratoren A/B/C eine weitere Abkühlung auf etwa 100 °C und schliesslich im Wasserkühler 13 eine letzte auf etwa 40 °C. Aus dem Abscheider 14 wird auskondensiertes Wasser abgezogen. Das verbleibende Gas wird in die Waschsäule 17 geleitet, wo das $SO_2$ ausgewaschen wird. Das Reingas verlässt die Säule 17 durch Leitung 19 und wird in einem der Regeneratoren A/B/C auf etwa 200 °C angewärmt, bevor es in den Kamin abgegeben wird. Die abgegebenen 1310 kmol/h Reingas haben folgende Zusammensetzung:

| | |
|---|---|
| $SO_2$ | 10 ppm |
| $O_2$ | 0,38 Mol% |
| $N_2$ | 25,95 Mol% |
| $CO_2$ | 66,04 Mol% |
| $H_2O$ | 7,63 Mol% |

Das beladene Waschmittel wird in der Regeneriersäule 23 regeneriert und das dabei ausgasende Gas über Wärmetauscher 34, Abscheider 35 und Leitung 3 zum Reaktor 4 zurückgeführt.

Beispiel 3:
Verarbeitung eines schwefelreichen Claus-Gases

Über Leitung 1 werden der Anlage 1000 kmol/h eines Rohgases folgender Zusammensetzung zugeführt.

| | |
|---|---|
| $H_2S$ | 85,0 Mol% |
| $CO_2$ | 15,0 Mol% |

In diesem Beispiel wird das Gas in einem Claus-Ofen verbrannt, jedoch stärker unterstöchiometrisch als in einer herkömmlichen Claus-Anlage. Bei diesem Beispiel entfällt der Wärmetauscher 2. Während in einer konventionellen Claus-Anlage ein Drittel des $H_2S$ zu $SO_2$ verbrannt wird, müssen hier nur etwa 17% des $H_2S$ verbrannt werden. Hinter dem Brenner wird in der Reaktionskammer des Claus-Ofens Kreislauf-$SO_2$ zugemischt. In einer Abwärmenutzung wird die Reaktionswärme der Claus-Reaktion zur Dampferzeugung genutzt. An dieser Stelle sind dann etwa 60% des gesamten Schwefels aus dem Rohgas und aus dem Kreislauf-$SO_2$ zu elementarem Schwefel umgesetzt.

Prinzipiell kann nun, wie in einer konventionellen Claus-Anlage, ein Schwefelkondensator folgen. Da eine Maximierung des Umsatzes an dieser Stelle im vorliegenden Verfahren keinen grossen Vorteil bringt, wird hier auf die etwas höhere Schwefelausbeute in den nachfolgenden Schritten durch Auskondensieren des elementaren Schwefels hinter der Abwärmenutzung verzichtet. Stattdessen wird das Gas mit dem in der thermischen Stufe gebildeten elementaren Schwefel in den Reaktor 4 geleitet. Dort findet wirderum die Claus-Reaktion statt, wobei der Temperaturanstieg durch den bereits im Gas enthaltenen elementaren Schwefel gebremst wird. Hinter dem Reaktor 4 hat das Gas eine Temperatur von etwa 380 °C.

Im Kondensator 5 wird nun der entstandene elementare Schwefel abgezogen. Die Menge entspricht etwa 80% des im Rohgas und im Kreislauf-$SO_2$ enthaltenen Schwefels. Durch Leitung 6 strömen aus dem Kondensator 5 1855 kmol/h eines Gases folgender Zusammensetzung:

| | |
|---|---|
| $H_2S$ | 5,93 Mol% |
| $SO_2$ | 2,97 Mol% |
| $S_2$ | 1,46 Mol% |
| $N_2$ | 41,67 Mol% |
| $CO_2$ | 8,08 Mol% |
| $H_2O$ | 39,89 Mol% |

Dieses Gas wird im Ofen 7 ohne Brenngaszufuhr verbrannt. Eine katalytische Nachverbrennung ist wegen der hohen Verbrennungstemperatur von etwa 800 °C nicht erforderlich. Die entstandene Wärme wird in einer Abwärmenutzung zur Dampferzeugung genutzt. Das Gas tritt dann mit einer Temperatur von etwa 280 °C in einen der Regeneratoren A/B/C ein und wird dort auf etwa 120 °C gekühlt. Da das Gas noch sehr viel Wasserdampf enthält, wird es im unteren Teil der Säule 17 durch einen Wasserkreislauf in direktem Wärmetausch auf etwa 40 °C gekühlt, wobei Wasser auskondensiert.

Durch einen Kaminboden tritt das kalte Gas in die Waschsektion der Säule 17 ein, wo $SO_2$ ausgewaschen wird. 1907,02 kmol/h Reingas verlassen die Kolonne über Leitung 19, werden in einem der Regeneratoren A/B/C auf etwa 200 °C vorgeheizt und dann in den Kamin gegeben. Das Gas hat folgende Zusammensetzung:

| | |
|---|---|
| $SO_2$ | 10 ppm |
| $O_2$ | 1,00 Mol% |
| $N_2$ | 83,74 Mol% |
| $CO_2$ | 7,76 Mol% |
| $H_2O$ | 7,50 Mol% |

Das beladene Waschmittel wird in der Regeneriersäule 23 regeneriert, wobei das über 34, 35 und 3 zurückgeführte $SO_2$-Kreislaufgas gewonnen wird. Es fällt in einer Menge von 224,4 kmol/h an und hat folgende Zusammensetzung:

| | |
|---|---|
| $SO_2$ | 98,04 Mol% |
| $N_2$ | 0,22 Mol% |
| $CO_2$ | 0,85 Mol% |
| $H_2O$ | 0,89 Mol% |

**Patentansprüche**

1. Verfahren zum Reinigen eines mindestens mit $CO_2$ und $H_2S$ verunreinigten Gasstromes, der vorgewärmt und in Gegenwart von rückgeführtem $SO_2$ einer katalytischen Umsetzung des $H_2S$ zu elementarem Schwefel unterworfen wird, wobei der dabei anfallende elementare Schwefel abgetrennt und das zumindest $H_2S$, $SO_2$, $CO_2$ und Wasser enthaltende Restgas nach oxidativer Umsetzung des $H_2S$ und $SO_2$ und Abkühlung einer Wäsche mit einem Polyäthylenglykoläther enthaltenden Lösungsmittel zugeführt wird, das nach Beladung mit $SO_2$ regeneriert und wiederverwendet und das bei der Regenerierung freiwerdende $SO_2$ zur katalytischen Umsetzung des $H_2S$ zurückgeführt wird, dadurch gekennzeichnet, dass das Restgas in Regeneratoren auf eine Temperatur zwischen 60 und 120 °C abgekühlt wird, wobei sich die Regeneratoren auf eine Temperatur zwischen 200 und 300 °C aufheizen, dass das Lösungsmittel auf Trockenbasis zu 60 bis 80% aus Tetraäthylenglykoldimethyläther, zu 15 bis 25% aus Triäthylenglykoldimethyläther, zu 2,5 bis 7,5% aus Pentaäthylenglykoldimethyläther und zu 2,5 bis 7,5% aus Halbäthern besteht, und dass das gewaschene, schwefelfreie Restgas in den Regeneratoren aufgeheizt und in den Kamin abgegeben wird.

2. Verfahren nach Anspruch 1, dadurch gekennzeichnet, dass das Restgas vor Abkühlung in den Regeneratoren im Wärmetausch zu verunreinigtem Gasstrom abgekühlt wird.

3. Verfahren nach Anspruch 1 oder 2, dadurch gekennzeichnet, dass das in den Regeneratoren abgekühlte Gas vor der Wäsche zur Beheizung der Regeneriersäule verwendet wird.

4. Verfahren nach einem der Ansprüche 1 bis 3, dadurch gekennzeichnet, dass das Lösungsmittel auf Trockenbasis zu 70% aus Tetraäthylenglykoldimethyläther, zu 20% aus Triäthylenglykoldimethyläther, zu 5% aus Pentaäthylenglykoldimethyläther und zu 5% aus Halbäthern besteht.

**Claims**

1. A process for purifying a gas stream contaminated at least with $CO_2$ and $H_2S$, which is preheated and, in the presence of recycled $SO_2$, is subjected to a catalytic conversion of the $H_2S$ to elementary sulphur, wherein the elementary sulphur which is thus produced is separated and the residual gas, which contains at least $H_2S$, $SO_2$, $CO_2$ and water, after oxidative conversion of the $H_2S$ and $SO_2$ and cooling, is fed to a washing step with a solvent which contains polyethyleneglycol ether and which, after having been charged with $SO_2$, is regenerated and re-used and the $SO_2$ released during the regeneration is recycled to the catalytic conversion of the $H_2S$, characterised in that the residual gas is cooled in regenerators to a temperature of between 60 and 120 °C, the regenerators being heated to a temperature of between 200 and 300 °C; that the solvent, on a dry basis, consists of 60 to 80% tetraethyleneglycoldimethyl ether, 15 to 25% triethyleneglycoldimethyl ether, 2.5 to 7.5%

pentaethyleneglycoldimethyl ether and 2.5 to 7.5% half-ethers, and that the washed, sulphurfree residual gas is heated in the regenerators and delivered to the chimney.

2. A process as claimed in Claim 1, characterised in that before cooling in the regenerators, the residual gas is cooled in heat exchange with the contaminated gas flow.

3. A process as claimed in Claim 1 or 2, characterised in that prior to the washing step, the gas cooled in the regenerators is used to heat the regeneration column.

4. A process as claimed in one of Claims 1 to 3, characterised in that the solvent, on a dry basis, consists of 70% tetraethyleneglycoldimethyl ether, 20% triethyleneglycoldimethyl ether, 5% pentaethyleneglycoldimethyl ether and 5% half-ethers.

**Revendications**

1. Procédé de purification d'un courant de gaz chargé au moins de $CO_2$ et $H_2S$ en tant qu'impuretés, ledit courant de gaz étant préchauffé et soumis, en présence de $SO_2$ recyclé, à une transformation catalytique de $H_2S$ en soufre élémentaire, tandis que le soufre élémentaire ainsi obtenu est séparé et que le gaz résiduaire renfermant au moins $H_2S$, $SO_2$, $CO_2$ et de l'eau, après la transformation par oxydation de $H_2S$ et de $SO_2$ et après avoir été refroidi, est amené à une étape de lavage à l'aide d'un solvant qui renferme de l'éther de polyéthylèneglycol et qui, après avoir été chargé de $SO_2$, est régénéré et recyclé, $SO_2$ dégagé lors de la régéneration étant recyclé vers l'étape de transformation catalytique de $H_2S$, caractérisé en ce que le gaz résiduaire est refroidi dans des régénérateurs à une température comprise entre 60 et 120 °C, cependant que les régénérateurs sont réchauffés alors à une température comprise entre 200 et 300 °C, en ce que le solvant est constitué à sec par 60 à 80% de diméthyléther de tétraéthylèneglycol, 15 à 25% de diméthyléther de triéthylèneglycol, 2,5 à 7,5% de diméthyléther de pentaéthylèneglycol et 2,5 à 7,5% d'hémi-éthers, et en ce que le gaz résiduaire lavé et exempt de soufre est réchauffé dans les régénérateurs et évacué dans l'atmosphère.

2. Procédé selon la revendication 1, caractérisé en ce que le gaz résiduaire est refroidi par échange thermique avec un courant de gaz non purifié, avant son refroidissement dans les régénérateurs.

3. Procédé selon la revendication 1 ou 2, caractérisé en ce que le gaz refroidi dans les régénérateurs est utilisé, avant son lavage, pour réchauffer la colonne de régénération.

4. Procédé selon une des revendications 1 à 3, caractérisé en ce que le solvant est constitué, à sec, par 70% de diméthyléther de tétraéthylèneglycol, 20% de diméthyléther de triéthylèneglycol, 5% de diméthyléther de pentaéthylèneglycol et 5% d'hémi-éthers.

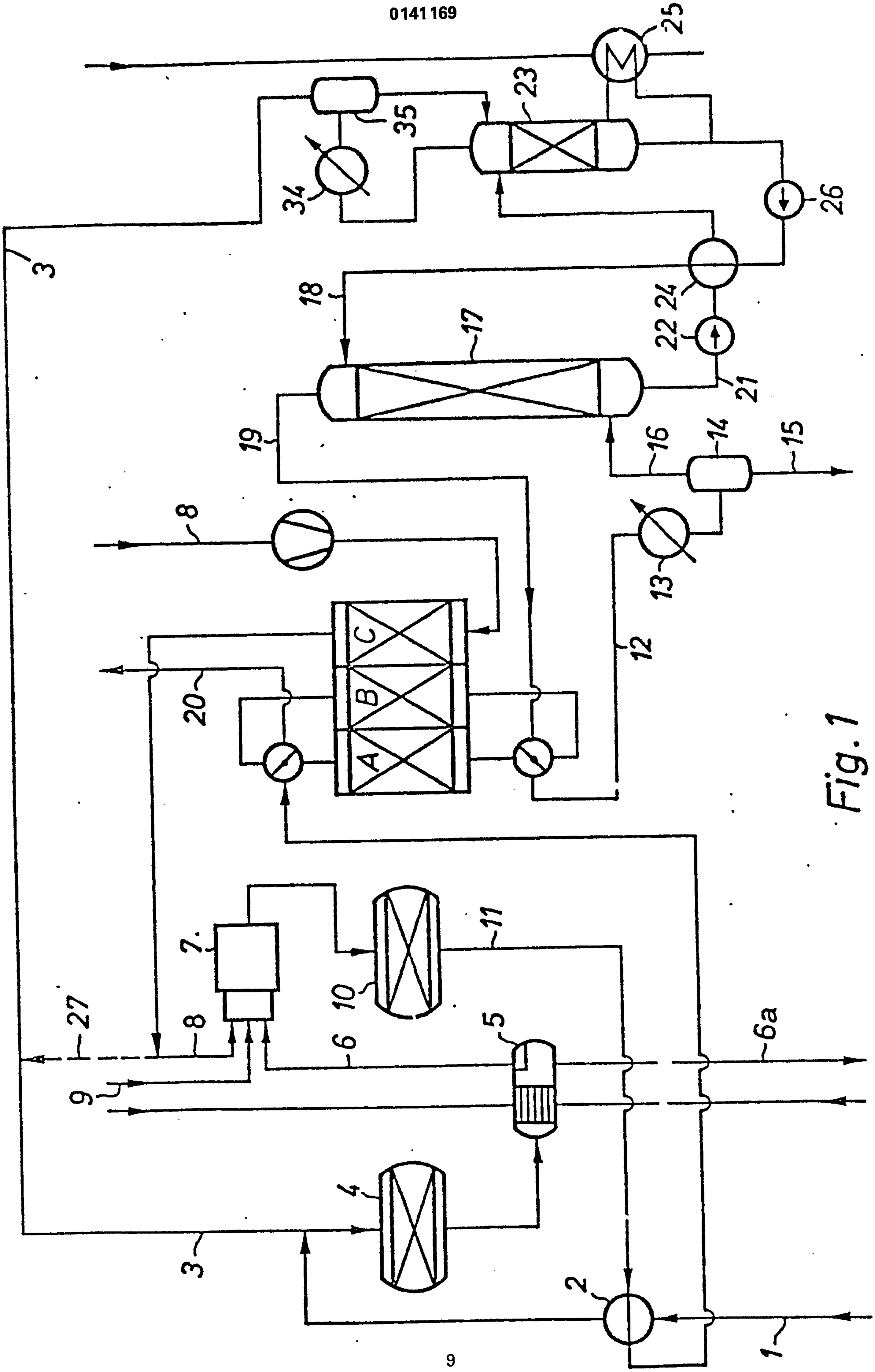
1
2
3
4
5
6
6a
7.
8
9
10
11
12
13
14
15
16
17
18
19
20
21
22
23
24
25
26
27
34
35
A
B
C

Fig. 1

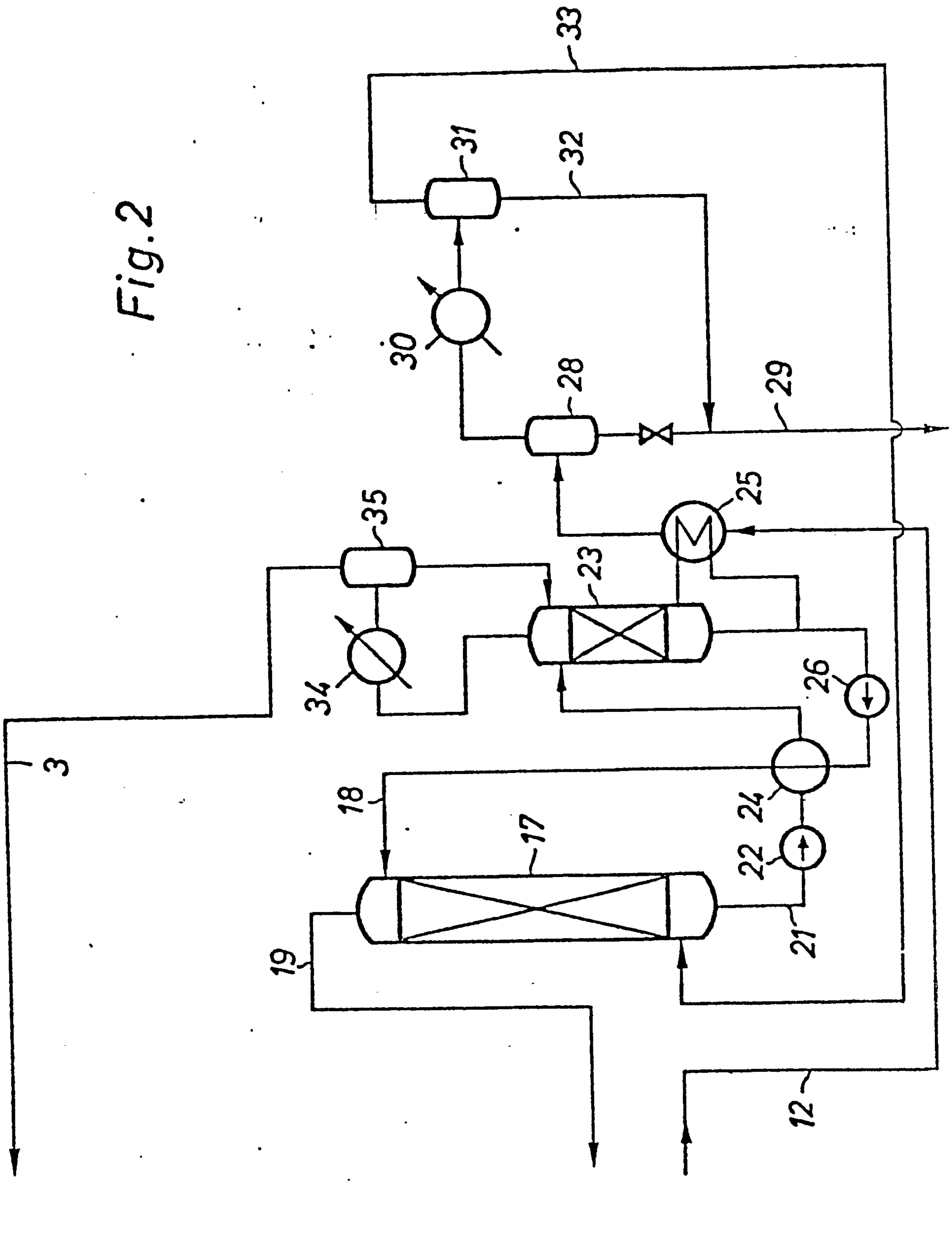


Fig.2